# EUROPEAN PATENT APPLICATION

(11) **EP 1 498 898 A1**
(43) Date of publication of application: **19.01.2005**
(21) Application number: 03720910.3
(22) Date of filing: 16.04.2003
(51) Int. Cl.: G11B 27/00, G11B 27/10, G06F 17/30, G06F 12/00, H04N 5/91

(54) **IMAGE DISPLAY PROGRAM AND INFORMATION RECORDING MEDIUM CONTAINING THE PROGRAM**

(30) Priority: 23.04.2002 JP 2002120400
(71) Applicant: KONICA CORPORATION, Tokyo 163-0512 (JP)
(72) Inventor: UEDA, Yutaka, Konica Photo Imaging Corp., Hino-shi, Tokyo 191-8511 (JP)
(74) Representative: Henkel, Feiler & Hänzel
(86) International application number: PCT/JP2003/004826
(87) International publication number: WO 2003/092005

(57) **Abstract**

A computer program to control a computer to function as an image data processor, the image data processor, including:
a display section for displaying an image based on an image information; and
a retrieving section for retrieving the image information in which an identification information of the program is recorded as a header information.

## Description

### BACKGROUND OF THE INVENTION

The present invention relates to an image display grogram to display image data supplied by customers and information recording medium for storing said program.

In recent years, customers are increasing who handle images captured by a camera as digital image data. For example, in the case of digital cameras, image data stored in information recording media are read employing a computer terminal such as a personal computer, whereby it is possible to easily view images by reproducing them employing image display software installed in the personal computer.

Further, services are available in which images captured by a camera using a photographic film are converted to digital image data. For example, when exposed film strips are brought to order-receiving shops such as photo-service shops including a laboratory or a convenience store, the following services are now available. In photo-service shops, after developing film strips, negative film strips are read by a scanner and read image data are written on information recording media such as CD-R.

Furthermore, it is possible to view photographic images as digital data by performing index display or slide display upon reading application software in which image data read from photographic film strips are installed in a personal computer, or application software written on information recording media.

Generally, application software such as image display software or slide show software is prepared for the use of ordinary people to make it possible to utilize various types of image data obtained by scanning photographic film strips, image data captured by digital cameras, or image data obtained via the Internet. Accordingly, when application software is used, all the types of image data described above are displayed. However, when the amount of stored image data is large, displayed image data becomes excessive, and occasionally, it becomes difficult to perform operation to retrieve necessary image data.

Namely, in a slide show, cases frequently occur in which image data in the specified group (for example, image data obtained by scanning photographic film strips) are only displayed. However, when the conventional types of application software are used, all image data are displayed. As a result, it is required to select desired image data one by one from a number of types of image data.

On first viewing, a method which displays all the types of image data seems to be convenient. However, in the case in which image data of the specified group are only selected, the above method is inconvenient. Further, some of image data are suitable for reproduction for the use of specified application software. Compared to the case in which every time when reproduction is performed employing application software, desired image data are selected from a number of image data, a case is occasionally more convenient in which only image data matching certain conditions are displayed to be selectable.

### SUMMARY OF THE INVENTION

In view of the foregoing problems, the present invention was achieved. A major object of the present invention is to provide an image display program capable of retrieving and displaying only image data which are suitable for application software recorded on information recording media as well as information recording media for storing the aforesaid program.

In order to achieve the above object, in a computer program for making a computer to actualize the function of displaying an image based on an image information on a display device, the computer program makes the computer to actualize the function of a retrieving means of the image information in which an identification information of the program is recorded as a header information.

Further, the computer program described above further makes the computer to actualize the function of an identifying means, carrying at least information showing the identification information of the aforesaid program, for identifying the image information referring to a definition information retrievable from the program.

In the present invention, the computer program further makes the computer to actualize the function of displaying the image based on the image information retrieved by the aforesaid retrieving means on the display means.

Still further, in the computer program described above,
the identification information of the program has been recorded in the image information as the header information,
when the image in the image information is overwritten on the original image or newly recorded,
the identification information of the program which is the same as the identification information of the program recorded as the header information of a main information of the image displayed by the display device, as the header information for a primary image information to be overwritten or to be newly recorded, when the main image information of the image information is overwritten on the original image information or newly recorded.

Still further, in the computer program described above, the image information includes the identification of the program and is identified referring to the definition information retrievable from the program,
when the image information being a base of the image displayed on the display means is overwritten or newly recorded,
the computer program makes the computer to actualize the function as a means for renewing the description about the name and storage location of the original image information for the definition information to the description about the name and storage place of the image information to be overwritten or newly recorded.

Still further, in the computer program described above, the identification information of the program has been recorded in the image information as the header information,
when the image in the image information is overwritten on an original image information file or newly recorded, the identification information of the program which is the same as the identification information of the program recorded as the header information of the image which is the original image information of the image displayed by the display device as well as by the retrieving device for retrieving the image information in which the identification information of the program as the header information, as the header information for the image to be overwritten or to be newly recorded, when the main image information in the image information is overwritten on a file of the original image information or newly recorded.

Still further, in the computer program described above, the image information includes the identification of the program and is identified referring to the definition information retrievable from the program, and
the computer program makes the computer to actualize the function of an identifying means, carrying at least information showing the identification information of the aforesaid program, for identifying the image information referring to a definition information retrievable from the program, and further when the image information being a base of the image displayed on the display means is overwritten or newly recorded, the computer program makes the computer to actualize the function as a means for renewing the description about the name and storage location of the original image information for the definition information to the description about the name and storage place of the image information to be overwritten or newly recorded.

Still further, in the computer program described above, the image information includes the image files in the format of exit/JPEG.

Still further, on the information recording media of the present invention, the aforesaid image display program is recorded to be computer-readable.

As stated above, in the present invention, during recording of image information on information recording media, programs identification information is written as header information of image information, or at least information indicating program identification information is included. Retrievable definition information is written based on the above programs. In image display programs, when images are displayed on a display means based on image information, image information in which specified information of programs is written as header information of image information or image information specified by definition information is retrieved and images based on the retrieved image information are only displayed. In such a manner, it is possible to display image data, which are suitable for programs, whereby it is possible to enhance selectivity of image information and operability of programs.

Further, during storage of image information employing the aforesaid image display program, the same information as the program identification information recorded as header information of the image information is overwritten or written as header information of image information newly stored, or description regarding the original image information in the definition information is overwritten or renewed to description of image information newly stored. In such a manner, are overcome drawbacks such that it becomes impossible to retrieve once stored image information employing the aforesaid image display program. As a result, it is possible to always provide, to customers using the aforesaid program, suitable image data for the program.

### BRIEF DESCRIPTION OF THE DRAWINGS

Fig. 1 is a diagram showing one example of the constitution of the information recording medium production system according to the present invention.
Fig. 2 is a flow chart showing one example of a series of steps of the information recording medium production method according to the present invention.
Fig. 3 is a diagram showing one example of the data structure of the information recording medium according to the present invention.
Fig. 4 is a diagram showing one example of the data structure of the information recording medium according to the present invention.
Fig. 5 is a diagram showing one example of the data structure of the information recording medium according to the present invention.
Fig. 6 is a diagram showing one example of the data structure of the information recording medium according to the present invention.
Fig. 7 is a diagram showing one example of the data structure of the information recording medium according to the present invention.
Fig. 8 is a block diagram showing one example of means which are operated by the slide show program according to the present invention.
Fig. 9 is a flow chart showing one example of processing steps of the slide show program according to the present invention.
Fig. 10 is a diagram showing one example of a screen constitution (being a menu screen) displayed by the slide show program according to the present invention.
Fig. 11 is a diagram showing one example of a screen constitution (a slide show set screen) displayed by the slide show program according to the present invention.

### DETAILED DESCRIPTION OF THE PREFERRED EMBODIMENTS

In one preferred embodiment, on the information recording medium according to the present invention are recorded, as one set, image data read from photographic film strips submitted by customers as well as an image display program to reproduce the aforesaid image data to be readable by a computer, and on image data and a definition file is written relating information which specifies image data capable of calling of the aforesaid program. The image display program allows a computer to function as
a means to retrieve relating information from the header of image data or the definition file,
a means to perform index display of retrieved image data on a display means, and
a means to record the same relating information as the original image data or to renew relating information of the definition file when image data are overwritten or newly stored. Since only suitable image data for the aforesaid program are retrieved and displayed, it is possible to enhance selectivity of image data and operability of progems.

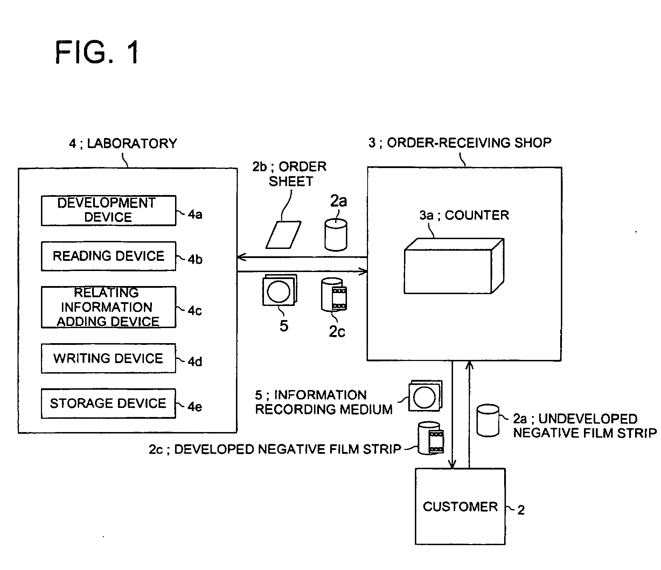

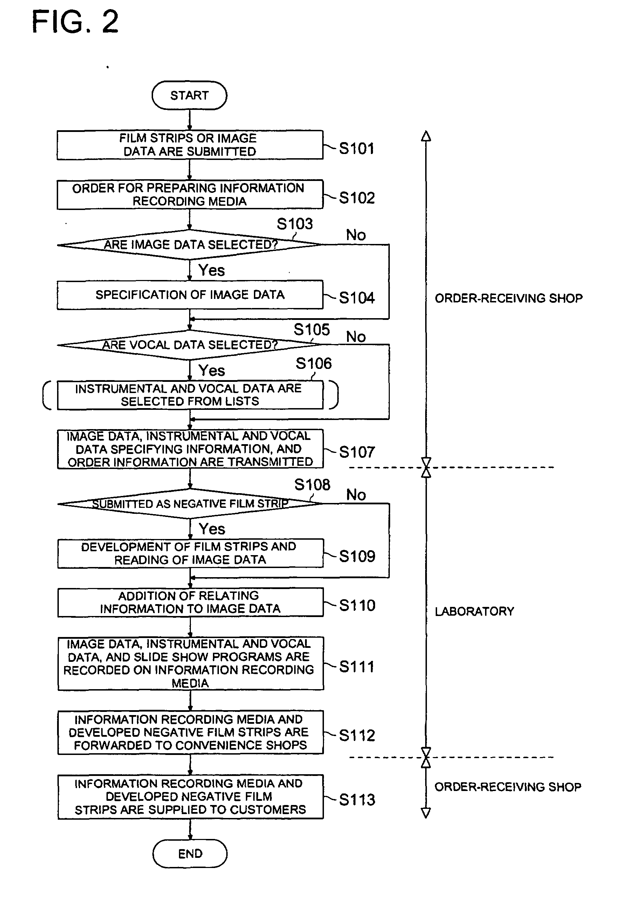

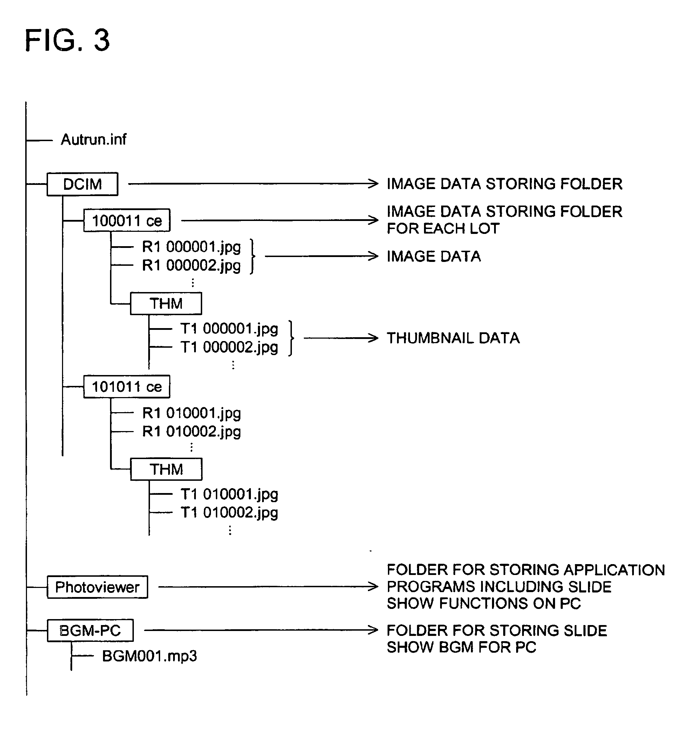

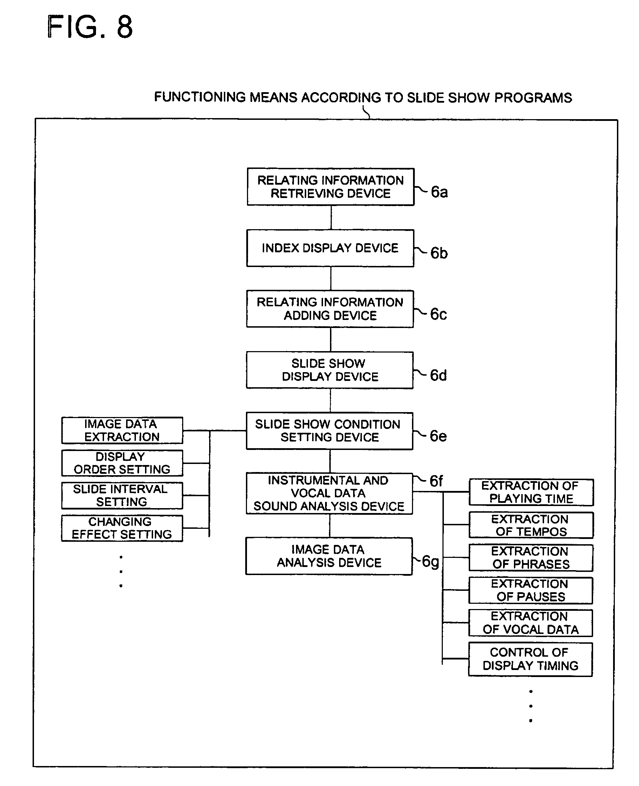

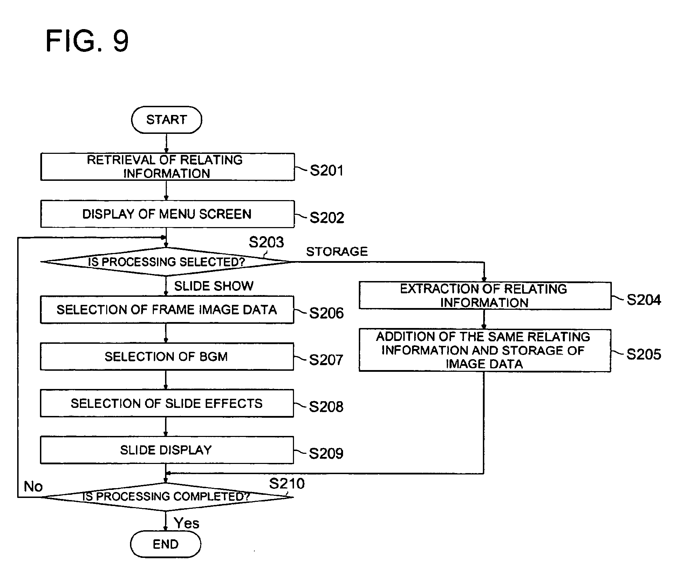

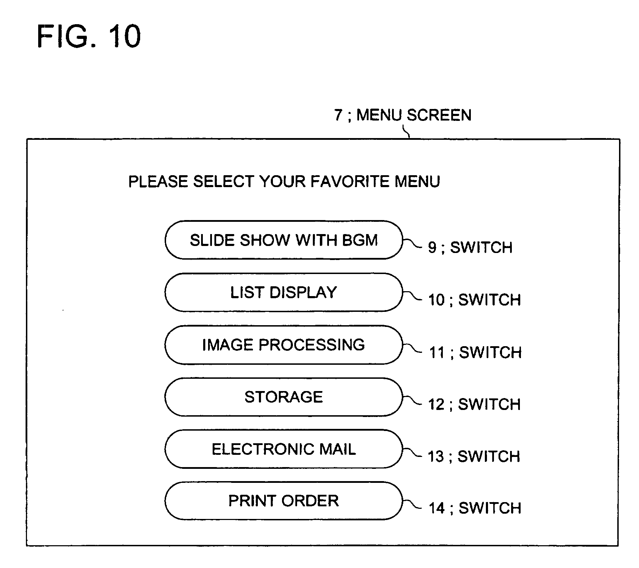

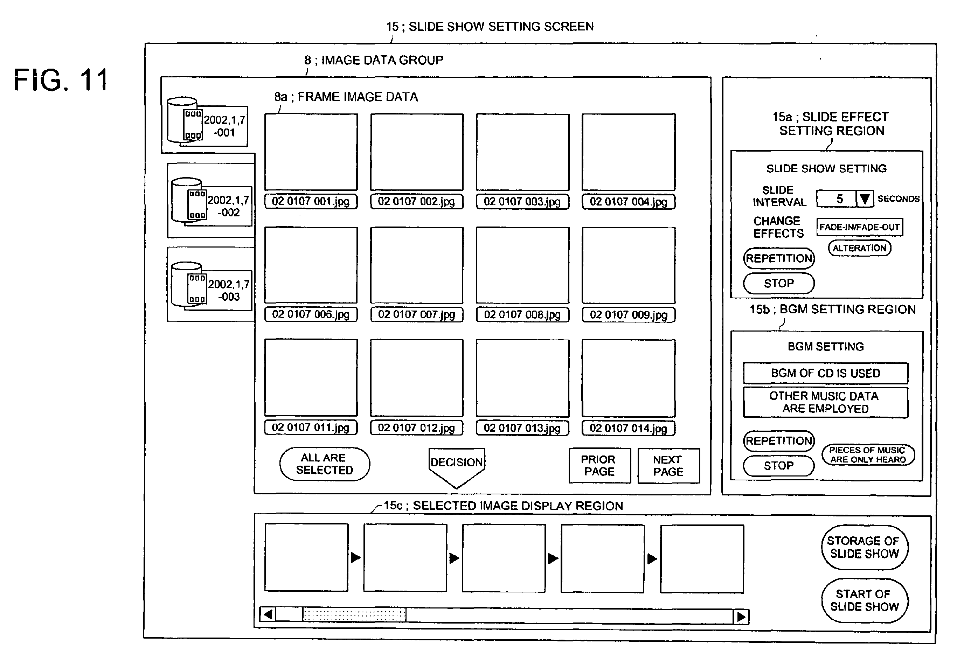

In order to detail the above embodiments of the present invention, one example of the slide show program and information recording medium according to the present invention will now be described with reference to Figs. 1 - 11. Fig. 1 is a diagram showing one example of the constitution of information recording medium production system; Fig. 2 is a flow chart showing one example of production steps of an information recording medium; and Figs. 3 - 7 are diagrams showinbg a data structure of information recording medium. Further, Fig. 8 is a block diagram showing means which are operated based on a slide show program; Fig. 9 is a flow chart showing processing steps of a slide show program; and Figs. 10 and 11 are diagrams showing the constitution example of a screen displayed in a slide show program.

As described in conventional techniques, in common image reproduction programs and slide show programs, are displayed all the image data in the various types obtained employing various methods such as image data obtained by scanning photographic film strips, image data captured by digital cameras, or image data obtained via the Internet.

However, when slide shows are practiced, cases frequently occur in which a group of image data which are specifically related to each other (for example, image data obtained by scanning one film strip) is only displayed instead of displaying a number of unspecified image data which are not related to each other. In such a case, when all the image data are displayed to be selectable, it is necessary to select desired image data from a number of image data to make selection troublesome.

Accordingly, programs are available which only extract image data (for example, image data under the specified storage form) provided with desired header information upon referring to image data-added information (header information). However, information recorded as header information commonly includes color information and sizes of image data as well as information of a compression ratio, and image information added with information of application software is not available. As a result, it was not possible to only extract suitable image data for application software.

Further, of various types of header information, there are some types of information which are erased in the case of overwriting storage and new storage. Consequently, cases occasionally occur in which, for example, even though it is possible to retrieve original image date, it becomes impossible to retrieve stored image data after being once displayed employing an image display program, employing header infraction as conditions.

As noted above, even though conventional image display programs as well as slide show programs are capable of only displaying image data in the specified data form, it is not possible to extract only image data corresponding to application software and it is necessary to select image data at every operation of application software. On the other hand, functions of slide show programs such as variation for setting slide effects or methods for reproducing instrumental vocal data differ in each other, and combinations of programs which realize effective slide shows by reproducing with the use of specified programs, and image data are available. In this case, it is required to select image data one by one from all the image data, resulting in marked inconvenience.

Accordingly, in the present example, the aforesaid problems are solved as follows. When image data are recorded on information recording media, program identification information is written on the header region of each of the image data, or image data specifying information which is displayed by the aforesaid program is added to the definition file (hereinafter, program identification information and image data specifying information are inegrated and designated as relating information), and when a program is operated, the specified image data are only displayed by performing retrieval employing the aforesaid relating inforamtion. Systems and methods will now be described which obtain such image display programs as well as information rescoring media on which image data and the aforesaid image display pogroms are recorded.

Incidentally, with reference to an example of slide show programs, image display programs will no be described. However any of the programs may be acceptable as long as functions to display image data are provided. Further, with reference to an example in which an order for information recording media 5 is placed in a convenience store, description is made. However, order-receiving shop 3 is not limited to a convenience store, and includes any of the stores which receive order for developing and printing of films strips. Further, order for information recording media may directly be placed at laboratory 4 not via order shop 3. Further, in the present example, reproduced instrumental and vocal data are written on information recording medium 5 with image data in slide shows. However, the instrumental and vocal data are not always necessary and image data and image display programs may only be written on information recording medium 5.

As shown in Fig. 1, information recording medium production system 1 is composed of customer 2 who submits image data in the form of undeveloped photographic film strip 2a, order-receiving shop 3 such as a convenience store, which receives an order of information recording medium 5, and selects image data and reproduced instrumental and vocal data, and laboratory 4 which receives image data as well as specified instrumental and vocal information, adds relating information to image data, and writes, on information recording medium 5 such as CD-R in a computer readable state, a combination of instrumental and vocal date with slide show programs.

Further, laboratory 4 is provided with development device 4a which develops undeveloped negative film strip 2a submitted by customer 2, a reading device 4b which reads developed images and converts to digital data, relating information adding device 4c which adds relating information to read image data, and storage device 4e which stores instrumental and vocals data and slide show programs.

Incidentally, the above devices may be separately constituted. Further, at least two devices such as development device 4a and reading device 4b, relating information adding device 4c and writing device 4d, or reading means 4b, relating information adding means 4c, and writing device 4d may be integrated. Further, printers may be installed which produce common prints based on image data which are read employing reading device 4b. Types of such printers are not particularly limited, and it is possible to use various types of printers such as ink jet type printers, electrophotographic type printers, or silver salt type printers.

Further, a case in which customer 2 submits image data in the form of undeveloped negative film 2a is mainly described. However, supplied may be information recoding media (hereinafter referred simply to as information recording medium) developed negative film strips or positive film strips (may be developed or undeveloped), prints, Compact Flash (a registered trade name), smart media, and Memory Stick (a registered trade name), memory cards such as multimedia card or SD memory card, or information recording medium which records image data obtained by digital cameras, and information recording media such as CD-R.

In information recording medium production system 1, as composed above, steps will now be described with reference to the flow chart in Fig. 2 in which customer 2 submits undeveloped film strip 2a, and receives information recording medium 5 on which relating information added image data and instrumental and vocal data, and slide show programs which allow a computer to function as a device to retrieve the aforesaid relating information are written.

Initially, in step S101, customer 2 submits undeveloped negative film strip 2a exposed employing a film camera to order-receiving shop 3 such as a convenience store. Incidentally, in the present example, when image data are written on information recording medium 5, relating information is written on the header of image data and the definition file. As a result, original image data may be in any of data forms. In addition to photographic images captured by cameras, examples include image data obtained via communication networks such as the Internet and image data which are processed by customer 2, employing image processing software.

Subsequently, in step S102, customer 2 places an order to prepare information recording medium 5 at counter 3a, and writes information specified by customer 2 on order sheet 2b. In this occasion, when customer 2a submits undeveloped negative film strip 2a, all the images recorded on undeveloped negative film strip 2a are commonly written on information recording medium 5. On the other hand, when developed negative film strips and information recording media are submitted, it is possible to use some of captured images. Customer 2 selects image data in step S103, and in step S104, selects image data used for slide shows by specifying frame numbers of the developed negatives film strip and the file name of information recording media.

Subsequently, in step S105, customer 2 decides whether instrumental and vocal data which run as BGM of slide shows is selected. In the present example, instrumental and vocal data are stored in storing device 4e in laboratory 4. When instrumental and vocal data are selected, a list of music corresponding to instrumental and vocal data is provided at counter 3a of order-receiving ship 3. In step S106, customer 2 specifies desired pieces of music based on the list.

Incidentally, it is not always necessary to select instrumental and vocal data, and previously specified instrumental and vocal data may be employed. Further, instrumental and vocal data are not limited to those stored in laboratory 4 and customer 2 may submit instrumental and vocal data in the previously specified form. It is possible to use, as BGM, instrumental and vocal data prepared by customer 2, instrumental and vocal data obtained from music CD by customer 2, and instrumental and vocal data obtained via communication networks such as the Internet.

Further, in step S107, order-receiving shop 3 forwards, to laboratory 4, undeveloped negative film strip 2a submitted by customer 2, music piece specifying information (when pieces of music are selected) and order sheet 2b. When laboratory 4 receives image data in the form of undeveloped negative film strip 2a (step S108), in step S109, development is performed employing development device 4a, and images on developed negative film strip are scanned employing a scanner and converted to digital data. Further, when image data are received in the form of developed negative film strips, images on the negative strip are converted to digital data employing reading device 4b.

Subsequently, in step S110, relating information which shows the relationship with the present slide show program is added to the header of the image data read by reading device 4b, or alternatively, a definition file is prepared which describes relating information identifying image data shown in the present slide show program. Incidentally, the structure of image data and the addition method of relating information are described below.

Further, in step S111, instrumental and vocal data corresponding to music specifying information or predetermined instrumental and vocal data and slide show programs are read from storing device 4e, and are written employing image data added with relating information (or image data and definition files) on information recording medium 5 such as CD-R in a computer-readable state. Incidentally, the above information recording medium 5 is not limited to CD-R and media which can be read by a computer terminal such as a personal computer may be acceptable. DVD-R and MO are usable, but CD-R is appropriate since it is readable for a number of personal computers and the cost is low.

The above information recording medium 5 results, for example, in a data structure shown in Fig. 3, and specifically, are composed of automatic installer initiation file (Autorun.inf), image data storing folders (DCIM), slide show application software, and storing folders of instrumental and vocal data run as BGM (BGM). In image data storing folders, image data storing files are provided for every lot (per one photographic film strip), and image data written with relating information and thumbnail data to display the image are recorded on each folder.

Thereafter, in step S112, laboratory 4 forwards information recording medium 5 recorded with image data, instrumental and vocal data, and slide show programs as well as developed negative film strip 2 to order-receiving shop 3, and in step S113, order-receiving shop 3 submits those to customer 2.

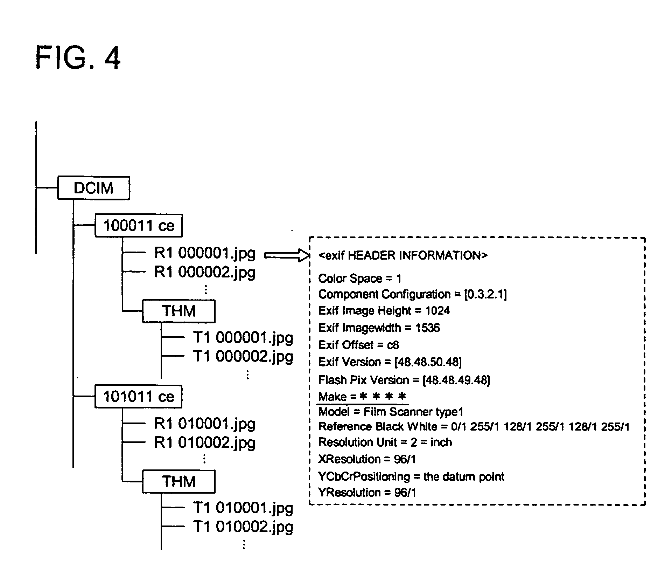

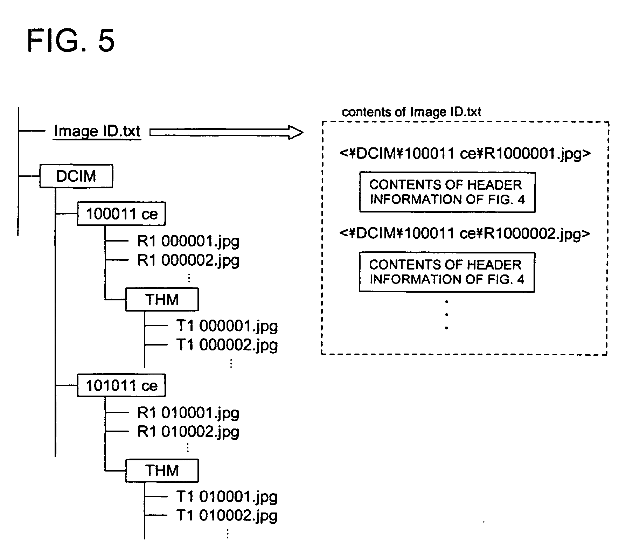

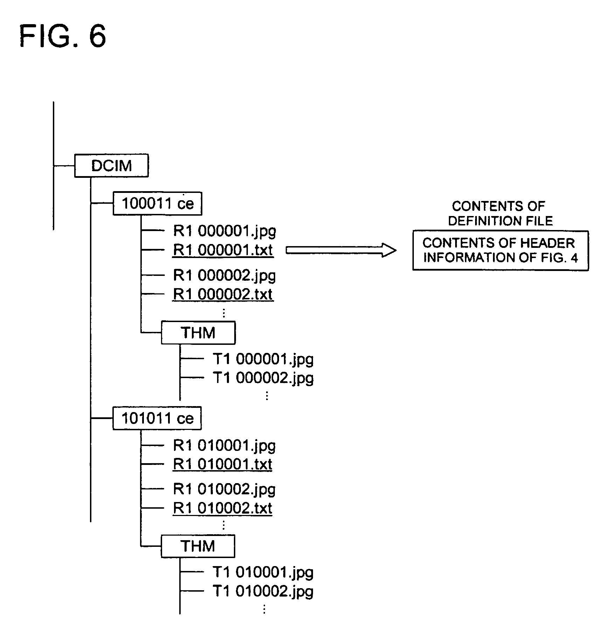

Subsequently, with reference to Fig.4 - 7, described is the image data relating method which is the feature of the present example.

Commonly, image data are composed of an image information region recorded with image information and a header region recorded with added information in relation to image information. For example, in the case of the image data in the exit/JPEG format, the header region is recorded with exif information (color relating information, image size relating information, data compression relating information, information of the name of manufactures, and the model name of image input devices, and the name of driver software of used devices), and it is possible to identify each of the image data by reading exif information in this header region.

However, image data are not available on which information to identity application software such as slide show programs is previously written. Further, when image data are overwritten or newly stored after being processed employing image processing software, if the above added information, sets of information other than the sets of basic information which are necessary for displaying image data (for example, color relating information and size relating information) are erased. Accordingly, it was not possible to securely extract only image data which are suitable for specified application software.

Accordingly, in the present example, relating information adding device 4c is provided in laboratory 4. On relating information adding means 4c, relating information is written as adding information of the header region of image data read by reading device 4b, or definition files written with relating information are created and are recorded on information recording medium, whereby on the application software side, it makes it possible to retrieve relating information and identify desired image data.

Specifically, as shown in Fig. 4, on information recording medium 5, image data is recorded as DCIM folder, and on folders (100011ce, etc.) corresponding to each of the photographic film strips, image data (R1000001.jp, etc.) in the exif/JPEG format and thumbnail image data (T000001.jpg) for displaying index are recorded, and on the header region in the exif/JPEG format, various types of addling information, as shown by a broken line, are recorded.

Of various types of adding information, it is not possible (or not preferable) to rewrite color relating information relating to color of image data, information relating to size and information relating to compression. However, it is possible to rewrite information ("Make" and "Model" relating to makers as well as information relating to the model of image inputting devices. Accordingly, by writing application relating information (for example, the name of application software and the name of manufacturer of application software), on re-writable items (herein, "Make"), it is possible to retrieve image data employing the aforesaid relating information on the application side.

Incidentally, in spite of the name of application software, in relating information which exhibits relation with application software, it is possible to use any of the designations capable of being identified on the application software side. Further, an item which is used to write the aforesaid relating information is not limited to "Make" and rewritable items are acceptable. Image data forms are not limited to exif/JPEG, and data forms capable of rewriting information of the header region are acceptable.

As stated above, when slide show programs are operated, by writing relating information with application software on the header region of image data recorded on information recording medium 5, it is possible to identify displayed image data and to minimize drawbacks in which unnecessary image data are displayed.

In the above description, the constitution is such that relating information is written on the header region of each of the image data. However, instead of writing information on each of the image data, by preparing specified definition files which are recorded on image recording medium 5, it is possible to retrieve and display specified image data. For example, as shown in Fig. 5, by preparing the definition file (ImageID.txt) which is related as adding information for display by slide show programs of the present example, the file name of all readable image data and these file names (image data), it is possible to display only image data identified by relating information with application programs described in the above definition file employing the present slide show programs or call only required data.

Further, as shown in Fig. 6, it is possible to constitute in such a manner that a definition file (R1000001.txt, etc.), which describes that it is possible to call each of image data employing the present slide show program, is written on the folder (100011ce, etc.) in which image data (R10000001.jpg, etc.) are stored. Even in such a constitution, it is also to enable operations in which application software refers to the definition file and only image data, which are identified by relating information with the application programs, are displayed and called.

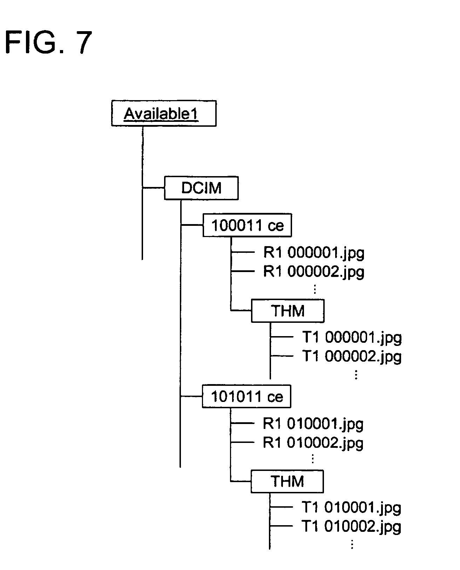

Furthermore, as shown in Fig. 7, a method is available in which management is performed by making a rule for the file name of image data and image data file storing directory name. For example, a constitution is acceptable in which image data (R10000001.jpg, etc.) and an image data folder (100011ce, etc.) are managed employing a managing folder ("Available 1"), and image data of the file name following the rule in the above managing folder or image data stored in the storing directory following the rule are only identified as image data applicable in the present slide show programs.

As noted above, by writing relating information on the header region of image data recorded on information recording medium 5, writing the definition file describing relating information, or writing application software which manages image data based on the specified rule, only suitable image data for the present slide show programs are automatically retrieved and subjected to index display only inserting information recording medium 5 into a personal computer, whereby it is possible to markedly enhance selectivity of image data as well as operability of slide show programs.

By preparing information recording medium 5 employing the above method, it is possible to retrieve image data employing the preset slide show programs. However, as noted above, when image data are overwritten or newly stored, specified adding information on the header region is erased. As a result, it becomes not possible to again retrieve of the slide show programs. Accordingly, the present slide show program is characterized in allowing a computer to function as a device which refers to relating information and retrieves and displays image data and also to function as a device to write the same relating information as the original image data on the header region during storage of image data. Functions and operations of the slide show program of the present example will now be described.

As shown in Fig. 8, the slide show program of the present example allows a computer to function as relating information retrieving device 6a which retrieves relating information from image data stored on information recording medium 5 as well as definition files, and extracts image data which are displayed by the present slide show program; index displaying device 6b which reduces image data and performs index display; relating information adding device 6c which writes relating information on the header of image data during storage of image data as well as definition files; slide show display device 6d which simultaneously displays image data and instrumental and vocal data; slide show conditions setting device 6e which sets slide show conditions; and instrumental and vocal data analyzing device 6f which analyzes instrumental and vocal data and controls the display timing of imager data; and image data analyzing device 6g which analyzes image data and extracts characteristics and selects instrumental and vocal data matching image data.

Incidentally, in the programs of the present invention, it is not necessary to allow the computer to perform all those functions, but to function as relating information retrieving device 6a, index displaying device 6b, and relating information adding device 6c. Further, a constitution may be employed in which prior art means are added other than those described above.

Operations of the above slide show program will now be described with reference to the flow chart in Fig. 9, and examples of screen constitution in Figs 10 and 11. Incidentally, it is possible to define the slide show program to be a program exclusive for displaying slide shows. However, being accompanied with display of slide shows, it is possible to function computers as a device such as image processing and storage, printing, electronic mailing, or upload. The following description is made assuming that the above functions are provided.

Initially, in step S301, when customer 2 inserts information recording medium 5 into a computer terminal such as a personal computer, a slide show program is automatically initiated, and as stated above, relating information is retrieved from image data of recording medium 5 and definition files.

Subsequently, in step S202, menu screen 7 as shown in Fig. 10 is displayed. On this menu screen 7, switches 9- 14 are displayed which select a processing applied to identified by relating information.

Subsequently, in step S203, when customer 2 clicks any one of switches 9 - 14 corresponding to the process intended by customer 2, employing a mouse, a screen corresponding to each of the processes is displayed. For example, when "list display" is selected, the image data having predetermined relating information in the header area, or the image data related by the definition file, are extracted, and the image data group in which the frame image data are displayed in the index are displayed for each film. When "image processing" is selected, it is possible to control brightness and color. Further, when "electronic mail" is chosen, specification of the image data size attached to an electronic mail and an input screen of the electronic mail are displayed, and subsequently, the electronic mail attached with selected image data is transmitted to the specified address. Selection of "print order" enables, via on-line, connection to the home page of a laboratory which receives order and enables production of high quality prints of image data. Incidentally, in the flow chart, processes other than "storage" and "slide show with BGM" are omitted.

A case in which "storage" is selected will now be described. As described above, image data have the image information region which records image information as well as the header region which records information relating to images. When image data are temporarily displayed and then stored, or are subjected to the specified process and subsequently stored, basic types of information such as the color and size of image data as well as the compression ratio of adding information in the header region are stored in the header region without any modification. However, other types of information (for example, "Make" and "Model") are erased.

Consequently, in the initial writing state in a laboratory, it is possible to retrieve relating information in terms of slide show programs. However, after performing overwriting storage or new storage, it becomes not possible to retrieve slide show programs. Accordingly, in the slide show programs in the present example, when storage is selected in step S203, in step S204, relating information is read from the header region of the original image data or definition files, and in step S205, the same relating information is added to the header region or description of the definition file is rewritten and image data are then stored. By performing such operations, it is possible to always identify image data stored employing the present slide show programs.

Further, when "slide show with BGM" is selected in step S203, slide show setting screen 15, as shown in Fig. 11, is displayed. In this slide show setting screen 15, displayed, for example, are image data group 8 in which frame image data 8a retrieved by relating information is arranged and displayed, slide effect setting region 15a which relates to slide intervals and slide change effects, BGM setting region 15b which selects instrumental and vocal data reproduced along with image data, and selected image displaying region 15c in which slide displaying frame image data 8a are arranged in displaying order.

Further, in step S206, frame image data 8a desired to perform slide display are selected from image data group 8, and subsequently, in step S207, instrumental and vocal data which are played as BGM are selected by operating BGM setting region 15b. Thereafter, in step 308, slide effects such as a slide interval or slide changing effects are set by operating slide effect setting region 15a. For example, display time of each of the slides as a slide display interval is selected from a pull-down menu or is directly inputted. Further, as slide changing effects, desired effects are chosen from those such as an effect of fade-in/fade-out in which image data are gradually displayed/erased employing a pull-down menu, an effect in which image data are gradually enlarged/reduced, or an effect in which image data are moved from upward or downward, or from left or right. Thereafter, in step 209, in accordance with the above settings, selected frame image data 8a and selected BGM are simultaneously subjected to slide display.

Herein, it is preferable that during a slide show, in addition to the display of image data and presentation of instrumental and vocal data, in order to enhance effects of slide shows, specified relationship between the display timing and instrumental vocal data presentation timing is held. The program described in the prior patent application (Japanese Patent Application No. 20002-13789) applied by the inventors of the present invention is suitable as a slide show grogram having such functions. The program described in the aforesaid prior patent application will now be described.

The slide show program described in the prior application enables a computer to function as a instrumental and vocal analyzing device 6f which performs processing which calculates instrumental and vocal data presentation time, extracts tempo, phrases, vocal data, pause, and settings of image data display timing, as well as image data analyzing device 6g which performs processes such as extraction of the specified shape and color from image data or selection of suitable instrumental and vocal data for image data upon referring to the characteristics of image data.

Further, for example, the presentation time of instrumental and vocal data is extracted from the format and size of instrumental and vocal data, as well as header information, and the resulting presentation time is divided by the number of image data, whereby the presentation time per image datum is calculated. Thus, it is possible to set slide shows so that when the presentation of instrumental and vocal data ends, image data display simultaneously ends, while when the presentation of a plurality of instrumental and vocal datary ends, the imager data display simultaneously ends.

Still further, the tempo of instrumental and vocal data is extracted from strength of instrumental and vocal data as well as frequency, and the time of slide effects (for example, the time of fade-in/fade-out) is set upon matching the tempo of instrumental and vocal data. In the case of pieces of music in quick tempo, the slide effects are quickened. On the contrary, in the case of pieces of music in slow tempo, the time of the slide effects is extended, whereby it is also possible to adjust the tempo of music with slide effects.

Still further, vocal data of instrumental and vocal data and pauses are extracted from strength of instrumental and vocal data as well as frequency, and a piece of music is divided by the number of phrases. For example, it is possible to set a slide show so that one set of image data is displayed for each phrase. By synchronizing the phrase of instrumental vocal data with image data display, the integrated feeling of pieces of music with images is created, whereby it is possible to enhance effects of slide shows.

Further, image data are subjected to image processing and the specified shape and color are extracted. Subsequently, a photographic image captured scenes are estimated. By presenting instrumental and vocal data which are chosen from previously recorded instrumental and vocal data matching the scene, it is possible for customer 2 to enjoy slide shows in which suitable pieces of music are played as BGM without selecting instrumental and vocal data.

As stated above, by employing the image reproducing program (the slide show program) of the present example, when image data are read, image data in which relating information is written in the header region or image data identified by relating information of the definition file are retrieved and displayed. Further, when image data are stored, the same information as the relating information of original image data is written on the header region of image data which are overwritten or newly stored, and the relating information of the definition file is renewed. As a result, customer 2 always utilizes only image data corresponding to the aforesaid program.

### POSSIBILITY OF APPLICATION TO INDUSTRIES

As described above, by employing the image display program of the present invention and the information recording medium storing the aforesaid program, it is possible to retrieve only suitable image data for the image display program of the present invention and perform index display, and it is also possible to enhance selectivity of image data as well as operability of image display program.

The reasons for the above are that relating information with image display programs is written on the header region of image data which are recorded on information recording media, a definition file which describes relating information is written, and the image display program allows a computer to function as a device to retrieve relating information, a device to display image data identified by the retrieved relating information, and a device which when image data are stored, extracts relating information from original image data, add the same relating information to image data, or renews and stores the relating information of a definition file.

Further, on the information recoding medium of the present invention, image data and a slide show program are combined as a set and recorded in a computer-readable state. It is possible for customers to view a slide show, in which suitable image data for the present program are displayed, by only inserting the information recording medium into a computer terminal such as a personal computer.

## Claims

1. A computer program to control a computer to function as an image data processor, the image data processor, comprising:
a display section for displaying an image based on an image information; and
a retrieving section for retrieving the image information in which an identification information of the program is recorded as a header information.

2. The computer program in claim 1, the image data processor, further comprising:
an identifying section for identifying the image information by referring to a definition information carrying at least information showing the identification information of the computer program and retrievable from the program.

3. The computer program in claim 1, the image data processor, further comprising:
a display section for displaying the image based on the image information retrieved by the retrieving section.

4. The computer program in claim 1, wherein the identification information of the program has been recorded in the image information as the header information, the image data processor, further comprising:
a recording section for recording the identification information of the program which is the same as the identification information of the program recorded as the header information of a main information of the image displayed by the display section, as the header information for a primary image information to be overwritten or to be newly recorded, when the main image information of the image information is overwritten on the original image information or newly recorded.

5. The computer program in claim 1, wherein the image information is identified referring to the definition information including the identification of the program and retrievable from the program, the image data processor, further comprising:
a renewing section for renewing the description about a name and storage location of the original image information for the definition information to the description about the name and storage place of the image information to be overwritten or newly recorded, when the image information which is the original image information of the image displayed on the display section is overwritten or newly recorded.

6. The computer program in claim 1, wherein the identification information of the program has been recorded in the image information as the header information, the image data processor, further comprising:
a recording section for recording the identification information of the program which is the same as the identification information of the program recorded as the header information of the image which is the original image information of the image displayed by the display section as well as by the retrieving section for retrieving the image information in which the identification information of the program as the header information, as the header information for the image to be overwritten or to be newly recorded, when the main image information in the image information is overwritten on a file of the original image information or newly recorded.

7. The computer program in claim 1, wherein the image information is identified referring to the definition information including the identification of the program, the image data processor, further comprising:
an identifying section for identifying the image information referring to the definition information carrying at least information showing the identification information of the program and retrievable from the program; and
a renewing section for renewing the description about the name and storage location of the original image information for the definition information to the description about the name and storage place of the image information to be overwritten or newly recorded, when the original image information of the image displayed on the display means is overwritten or newly recorded.

8. The computer program in Structure 1,
wherein the image information includes the image files in the format of exit/JPEG.

9. An information recording medium for storing a computer program to control a computer to function as an image data processor, the image data processor, comprising:
a display section for displaying an image based on an image information; and
a retrieving section for retrieving the image information in which an identification information of the program is recorded as a header information.

10. The information recording medium in claim 9, the image data processor, further comprising:
an identifying section for identifying the image information by referring to a definition information carrying at least information showing the identification information of the computer program and retrievable from the program.

11. The information recording medium in claim 9, the image data processor, further comprising:
a display section for displaying the image based on the image information retrieved by the retrieving section.

12. The information recording medium in claim 9, wherein the identification information of the program has been recorded in the image information as the header information, the image data processor, further comprising:
a recording section for recording the identification information of the program which is the same as the identification information of the program recorded as the header information of a main information of the image displayed by the display section, as the header information for a primary image information to be overwritten or to be newly recorded, when the main image information of the image information is overwritten on the original image information or newly recorded.

13. The information recording medium in claim 9, wherein the image information is identified referring to the definition information including the identification of the program and retrievable from the program, the image data processor, further comprising:
a renewing section for renewing the description about a name and storage location of the original image information for the definition information to the description about the name and storage place of the image information to be overwritten or newly recorded, when the image information which is the original image information of the image displayed on the display section is overwritten or newly recorded.

14. The information recording medium in claim 9, wherein the identification information of the program has been recorded in the image information as the header information, the image data processor, further comprising:
a recording section for recording the identification information of the program which is the same as the identification information of the program recorded as the header information of the image which is the original image information of the image displayed by the display section as well as the retrieving section for retrieving the image information in which the identification information of the program as the header information, as the header information for the image to be overwritten or to be newly recorded, when the main image information in the image information is overwritten on a file of the original image information or newly recorded.

15. The information recording medium in claim 9, wherein the image information is identified referring to the definition information including the identification of the program, the image data processor, further comprising:
an identifying section for identifying the image information referring to the definition information carrying at least information showing the identification information of the program and retrievable from the program; and
a renewing section for renewing the description about the name and storage location of the original image information for the definition information to the description about the name and storage place of the image information to be overwritten or newly recorded, when the original image information of the image displayed on the display means is overwritten or newly recorded.

16. The information recording medium in claim 9, wherein the image information includes the image files in the format of exit/JPEG.
